# EUROPEAN PATENT APPLICATION

(11) **EP 2 977 667 A1**
(43) Date of publication of application: **27.01.2016**
(21) Application number: 15177901.4
(22) Date of filing: 22.07.2015
(51) Int. Cl.: F16L 37/098

(54) **QUICK FITTING CONNECTOR**

(30) Priority: 23.07.2014 US 201414339241
(71) Applicant: Paccar Inc, Bellevue, WA 98004 (US)
(72) Inventor: TRAN, Richard, Bothell, WA 98012 (US); MURIAS, Adrian, Mercer Island, WA 98040 (US); BRADY, Andrew, Everett, WA 98203 (US)
(74) Representative: Gevers Patents

(57) **Abstract**

A coupler (100) releasably couples a tube (50) to a threaded port (80). The tube has a circumferential bead (58) formed on one end to engage the coupler. The coupler includes a fitting (110) with a threaded portion (112) to threadedly engage the port. A central passage (130) extends through the fitting and is made up of a first cavity (132), a second cavity (136), and a third cavity (140). The second cavity has a larger diameter than the third cavity, which is at least partially surrounded by the threaded portion of the fitting. When inserted into the central passage, the tube extends at least partially into the portion of the third cavity surrounded by the threaded portion of the fitting. The coupler further includes a retainer (150) that engages the bead on the tube to limit movement of the tube relative to the retainer when the tube is inserted into the central passage.

## Description

### BACKGROUND

Complex machinery, such as truck engines, often utilizes tubing to carry fluids between the various machine components. For an engine, these fluids can include engine coolant, oil, vacuum control lines, etc. For many such fluids, high operating temperatures and/or pressures require the use of robust connectors to connect the tubes to the machine components so that the fluids transported through the tubing do not leak from the connections. In order to ease installation and maintenance of the lines, quick connectors are often used to connect a hose to machine component. Such connectors allow an installer to create a fluid-tight connection without tools by simply pushing a male fitting into a female fitting.

Currently used quick connectors often include a male fitting made out of metal, such as steel, threadedly connected to a port in the machine component. A female fitting made out of a composite material is coupled to the hose at one end and releasably coupled to the male end at the other fitting. Because the steel male fitting is stronger than the composite female fitting, side loads applied to the connector are generally reacted through the composite female fitting. These loads tend to induce tension in the female fittings, and because composites are typically not as strong in tension as in compression, the female fittings are particularly susceptible to damage from loads applied to the connectors.

### SUMMARY

A disclosed embodiment of a coupler releasably couples a tube to a threaded port. The tube has a circumferential bead formed on one end to engage the coupler. The coupler includes a fitting with a threaded portion to threadedly engage the port. A central passage extends through the fitting and is made up of a first cavity, a second cavity, and a third cavity. The second cavity has a larger diameter than the third cavity, which is at least partially surrounded by the threaded portion of the fitting. When inserted into the central passage, the tube extends at least partially into the portion of the third cavity surrounded by the threaded portion of the fitting. The coupler further includes a retainer that engages the bead on the tube to limit movement of the tube relative to the retainer when the tube is inserted into the central passage.

Also disclosed is a quick connector for coupling a hose to a port. The connector includes a tube coupled at a first end to the hose. A circumferential bead is formed around the second end of the tube. A coupler includes a fitting having a threaded portion for threadedly engaging the port. A central passage extends through the fitting and is at least partially surrounded by the threaded portion. The tube extends at least partially into the portion of the central passage surrounded by the threaded portion when the tube is inserted into the central passage. A retainer engages the bead on the tube to limit movement of the tube relative to the retainer when the tube is inserted into the central passage.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 shows a side cross-sectional view of an exemplary embodiment of a quick fitting connector having a coupler connecting a tube to a port;

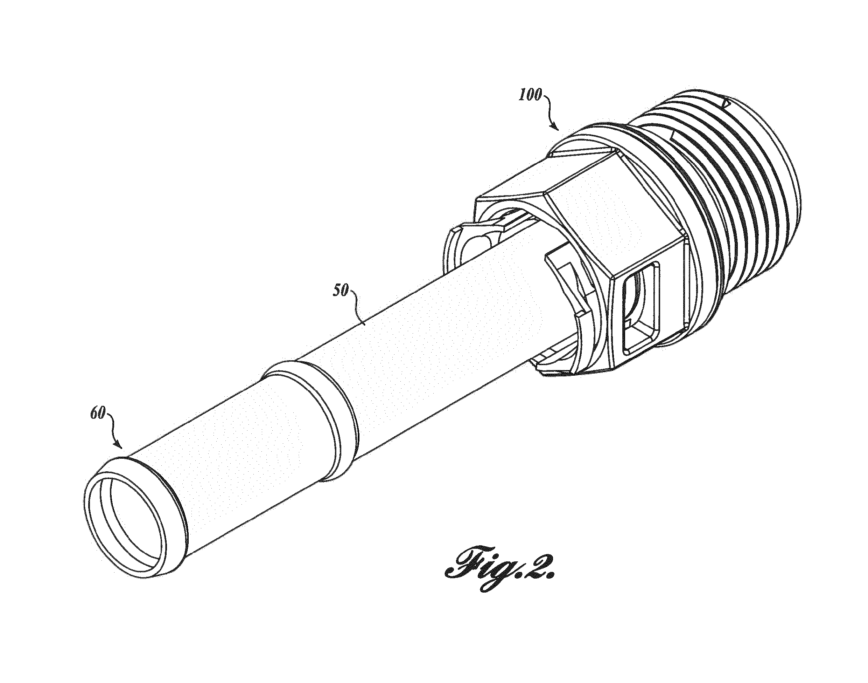

FIGURE 2 shows an isometric view of the coupler of FIGURE 1 connected to the tube;
FIGURE 3 shows an isometric view of the coupler of FIGURE 2 disconnected from the tube;
FIGURE 4 shows an exploded isometric view of the coupler of FIGURE 1;
FIGURE 5 shows a side cross-sectional view of a fitting of the coupler of FIGURE 1;
FIGURE 6 shows an isometric view of a retainer of the coupler of FIGURE 1;
FIGURE 7 shows a top cross-sectional view of the coupler of FIGURE 1; and
FIGURE 8 shows a side cross-sectional view of the coupler of FIGURE 1.

### DETAILED DESCRIPTION

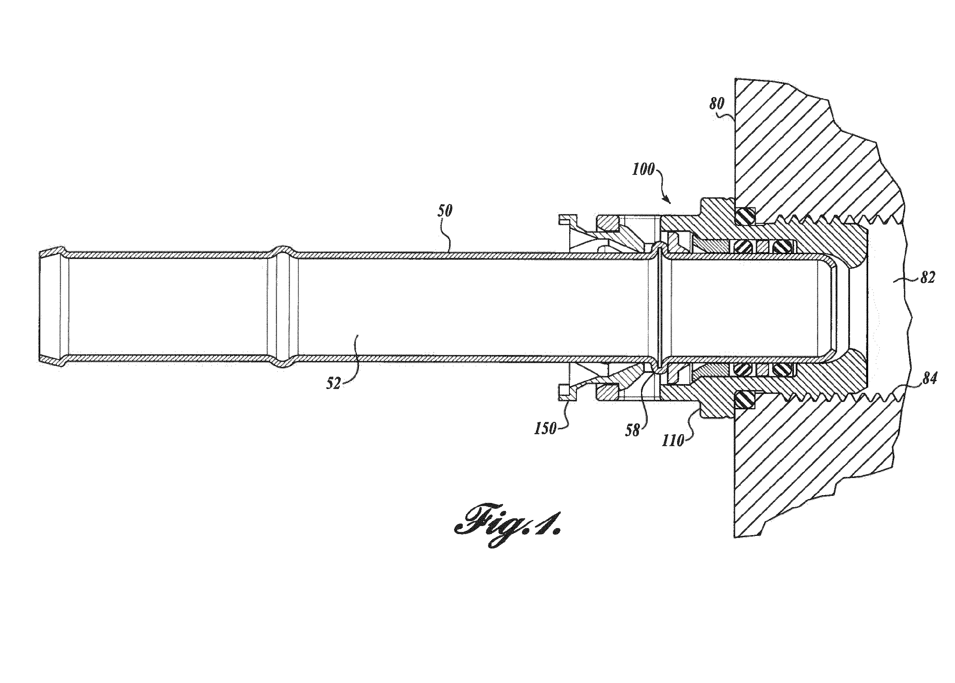

FIGURE 1 shows an exemplary embodiment of a coupler 100 connecting a tube 50 to a port 80. The tube 50 is a rigid tube with a central passage 52. The tube 50 is preferably formed from steel, but other materials, such as aluminum, copper, or any other suitable metal or alloy can be used. It will be appreciated that the tube 50 can also be formed from high strength composites having sufficient strength and durability to handle the heat and pressure of a fluid being passed therethrough in a particular application.

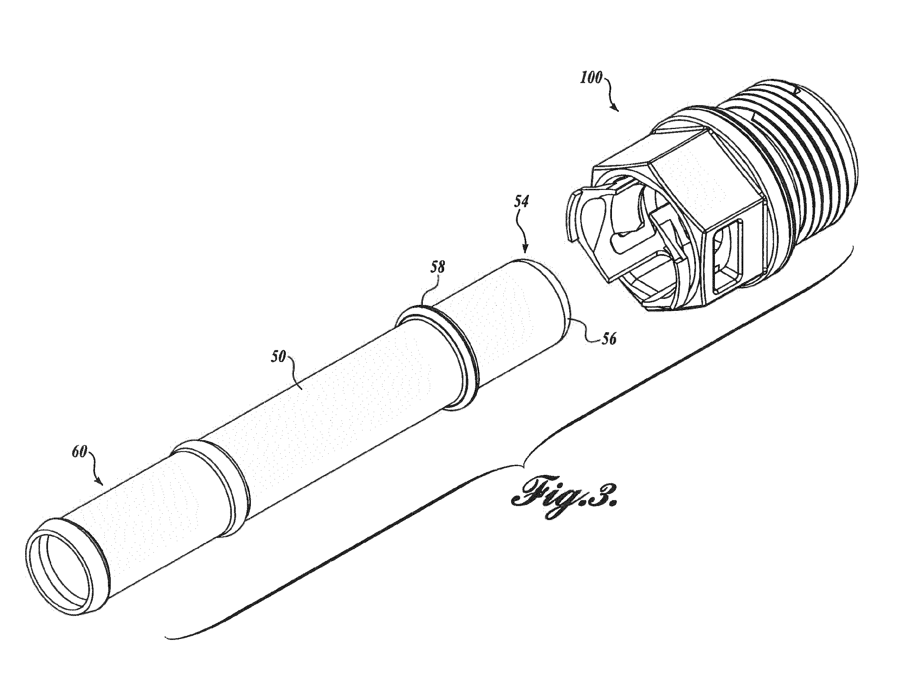

As shown in FIGURE 3, a first end 54 of the tube 50 is formed as the male half of a connector in accordance with SAE J2044, titled "Quick Connect Coupling Specification for Liquid Fuel and Vapor/Emissions Systems," the disclosure which expressly incorporated by reference herein. The tube 50 has a radius 56 formed on the end to facilitate insertion of the first end into the coupler 100. A circumferential bead 58 protrudes radially outward from the surface of the tube 50. As will be described in further detail, the bead 58 engages features of the coupler 100 to releasably couple the tube 50 to the coupler to form a fluid-tight connection. It will be appreciated that the present disclosure is not limited to a particular tube configuration, and similar tubes not conforming to SAE J2044 can be utilized with the presently disclosed coupler 100 or variations thereof. Such tubes should be considered within the scope of the present disclosure.

A second end 60 of the tube 50 is formed to allow for connection to a hose (not shown). In the illustrated embodiment, the second end 60 is formed in accordance with SAE J1231, titled "Formed Tube Ends for Hose Connections and Hose Fittings," the disclosure which expressly incorporated by reference herein. The illustrated second end 60 is configured to form a fluid-tight connection to a hose. Specifically, the second end 60 of the tube 50 is inserted into a hose and secured with a hose clamp. It will be appreciated that the form of the second end 60 of the tube is not limited to any particular configuration, and other forms suitable for connecting the tube 50 to various hoses, fittings, pipes, and other components are contemplated and should be considered within the scope of the present disclosure.

Referring back to FIGURES 1, the coupler 100 is a female part of a connector in accordance with SAE J2044, and is configured to receive the first end 54 of the tube 50 and form a fluid-tight seal therebetween. The coupler 100 includes a fitting 110 formed to receive the tube 50 at one end and to be secured to a port 80 at the other end.

The fitting 110 is preferably formed from a composite material having suitable strength and durability. In one exemplary embodiment, the composite material is glass fiber reinforced polyamide 6 or polyamide 12 with 20-30% glass fiber content. This material, which is commonly used for engine fittings, has sufficient strength, stiffness, and durability to operate in an engine environment. It also has favorable high heat distortion temperatures and impact resistance. It will be appreciated that the disclosed fitting 110 material is exemplary only, and that any number of suitable materials, including other composites, can be used without departing from the scope of the present disclosure.

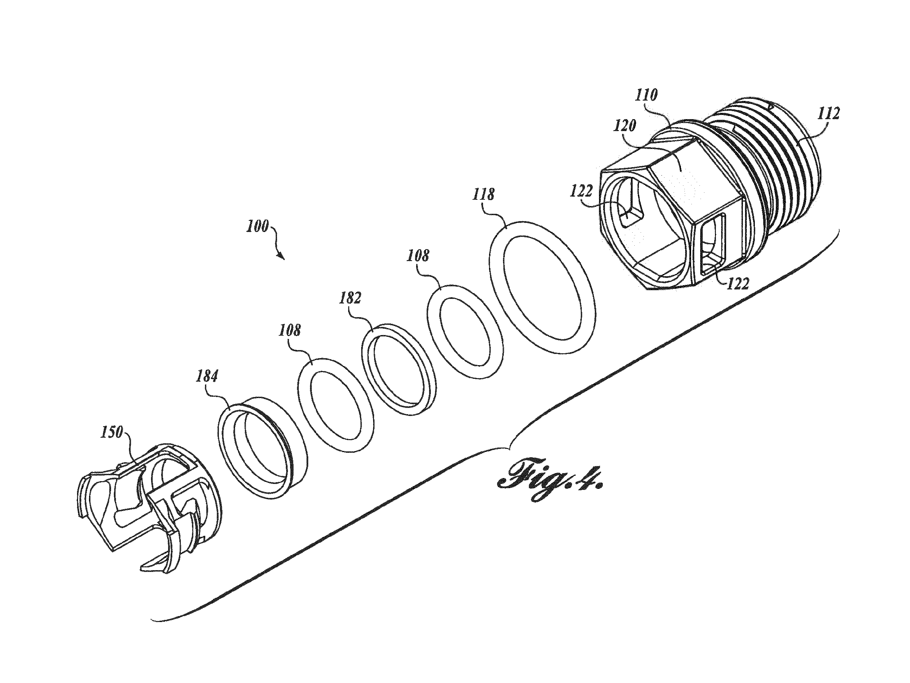

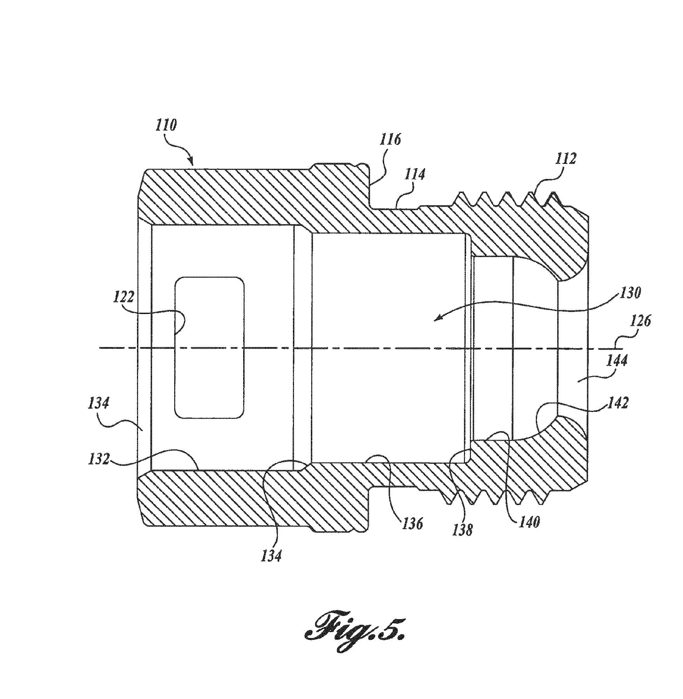

As best shown in FIGURES 4 and 5, the fitting 110 has external threads 112 on the end that engages the port 80. A recess 114 is disposed between the threads 112 and a shoulder 116 that extends radially outward from the recess. As shown in FIGURE 1, the port 80 includes an aperture 82 with internal threads 84 formed therein. The threads 112 of the fitting 110 engage the threads 84 of the port 80 to secure the fitting to the port. The recess 114 and shoulder 116 retain an O-ring 118 that is compressed between the port 80 and the fitting 110 to provide a fluid-tight connection between the port and the fitting.

The end of the fitting 110 that receives the tube 50 has hexagonal cross-section that provide a wrenching surface 120 to allow the use of a standard wrench to secure the fitting 110 to the port 80. It will be appreciated that the illustrated embodiment is exemplary only, and the hexagonal cross-section can instead have any suitable configuration for engaging a tool to facilitate securing the fitting 110 to the port 80. Moreover, it should be appreciated that any suitable configuration for securing the fitting 110 to the port 80 may be utilized, including, for example, configurations disclosed in ISO 6149, "Connections for Hydraulic Fluid Power and General Use -- Ports and Stud Ends with ISO 261 Metric Threads and O-ring Sealing," the disclosure of which is expressly incorporated herein.

Rectangular apertures 122 extend through two opposing surfaces of the wrenching surface 120. As will be described in further detail, the apertures 122 engage a retainer 150 mounted within the fitting 110 to secure the retainer within the fitting. It will be appreciated that the number, location, shape, and size of the apertures 122 can vary to accommodate different retainer 150 configurations. As such, the disclosed apertures 122 should be considered exemplary only.

As best shown in FIGURE 5, a central passage 130 extends through the fitting 110. The central passage 130 includes a cylindrical first cavity 132 oriented along a central axis 126 of the fitting 110. The first cavity 132 is sized and configured to have the retainer 150 disposed therein and to receive the first end 54 of the tube 50. The first cavity 132 transitions into a cylindrical second cavity 136 oriented along the central axis 126 of the fitting 110. The second cavity 136 has a smaller diameter than the first cavity 132, and a chamfer 134 forms the transition between the first and second cavities. The second cavity 136 transitions into a cylindrical third cavity 140, which has a smaller diameter than the second cavity 136, and is also oriented along the central axis 126 of the fitting 110. The change in diameter from the second cavity 136 to the third cavity 140 forms a shoulder 138. The end of the third cavity 140 opposite the second cavity 136 has an internal radius 142 extending circumferentially around the central axis 126. An aperture 144 is formed in the end of the fitting 110 so that the third chamber 140 is in fluid connection with the aperture 82 of the port 80 when the fitting 110 is coupled to the port.

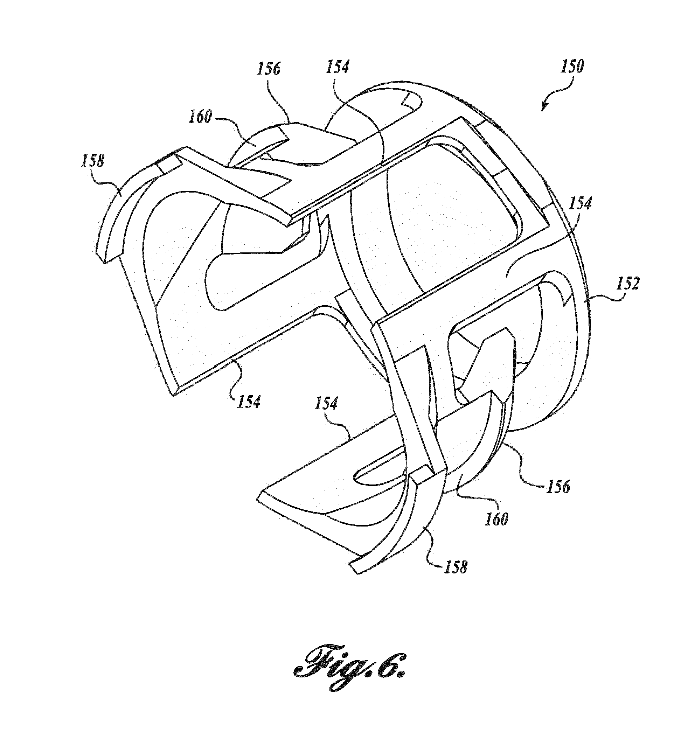

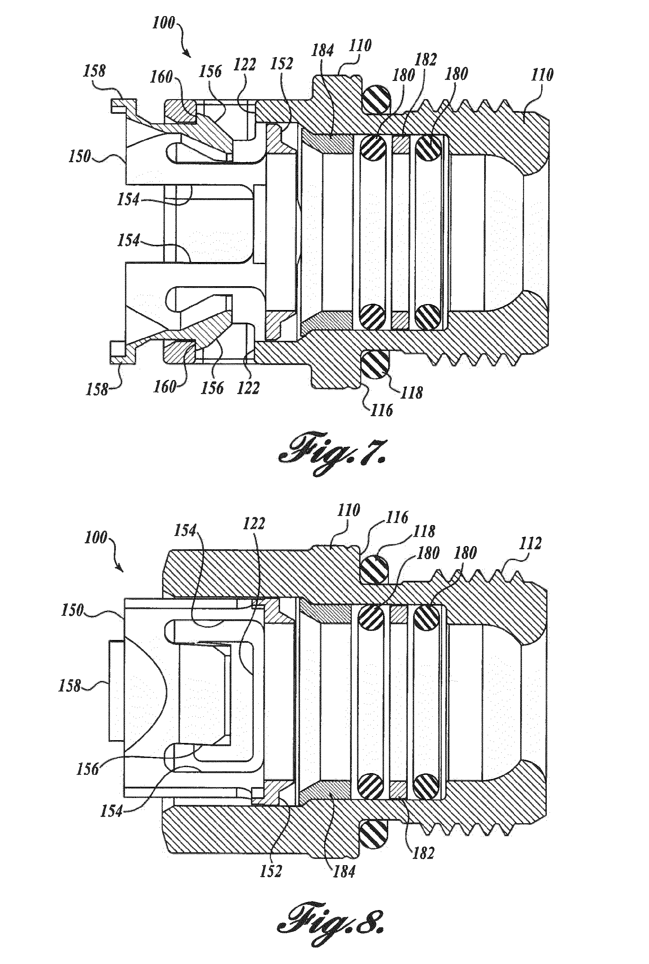

Referring now to FIGURES 4 and 6, the retainer 150 includes a round base 152 sized and configured to be slidably disposed within the first cavity 132 of the fitting 110. Two pairs of arms 154 extend axially from the base 152. Each pair of arms 154 supports an internal tab 156 and an external tab 158. Referring to FIGURES 1 and 7, when the retainer 150 is disposed within the fitting 110, each internal tab 156 extends radially outward to engage a corresponding aperture 122 in the fitting 110. Specifically, a shoulder 160 formed on each internal tab 156 engages an edge of the corresponding aperture 122 to prevent the retainer 150 from being demounted from the fitting 110, while still allowing some relative motion between the retainer and the fitting along the central axis 126 of the fitting.

The retainer 150 is preferably formed from a flexible, resilient material such as a polymer. In one preferred embodiment, the retainer is formed from nylon 612 in accordance with ASTM D4066 - PA0621; however, it will be appreciate that any material having suitable strength, durability, flexibility, and resistance to fatigue can be utilized and should be considered within the scope of the present disclosure.

In the illustrated embodiment, the arms 154 that support the internal tabs 156 and external tabs158 are thin enough to allow for the tabs to be flexed inwardly, i.e., toward the central axis 126 of the fitting 110. Thus, the retainer 150 can be mounted to the fitting 110 by applying pressure to flex the tabs together, inserting the retainer into the first cavity 132, and then releasing the tabs so that the tabs resume their unflexed "neutral" position, in which the internal tabs 156 engage the apertures 122 to retain the retainer within the fitting 110. In addition, the internal tabs 156 are sufficiently flexible so as to allow the internal tabs to be spread apart when the first end 54 of the tube 50 is inserted into the coupler 100, as will be described later.

The illustrated embodiment of a retainer is exemplary only and should not be considered limiting. In this regard, a variety of quick connect fittings using various configurations to retain the tube within the coupler are known in the art. Accordingly, it will be appreciated that the presently disclosed flexible retainer can be replaced with any suitable feature to retain the tube within the connector, and such embodiments should be considered within the scope of the present disclosure.

Referring now to FIGURES 7 and 8, a pair of O-rings 180 is disposed within the second cavity 136 of the fitting 110. A spacer 182 is positioned between the O-rings 180, and a collar 184 is mounted within the fitting 110 at the transition between the first and second cavities 132 and 136. The collar 184 and the shoulder 138 cooperate to retain the O-rings 180 within the second cavity 136, and the spacer 182 maintains separation between the O-rings. Both the spacer 182 and the collar 184 have central apertures to allow the first end 54 of the tube 50 to extend therethrough when the tube is mounted to the coupler 100.

To couple the tube 50 to the coupler 100, the first end of the tube is inserted axially into coupler. The tube 50 passes through the base 152 of the retainer 150, the collar 184, and the spacer 182 until it reaches the position shown in FIGURE 1. As the tube 50 is being inserted into the coupler 100, the bead 58 formed on the tube 50 engages the internal tabs 156 of the retainer 150. The retainer 150 is configured such that hand pressure applied to insert the tube 50 causes the bead 58 to flex internal tabs 156 outward as the bead passes by. When the bead 58 is clear of the internal tabs 156, the internal tabs spring back to their "neutral" positions. With the internal tabs 156 returned to their neutral positions, the movement of the bead 58, and therefore the tube 50, is limited by the internal tabs 156 and the base 152 of the retainer 150. Movement of the retainer 150 is in turn limited by engagement of the internal tabs 156 with the apertures 122 and by the engagement of the base 152 with the collar 184.

When the tube 150 is coupled to the coupler 100, the tube engages the O-rings 180 disposed within the second cavity 136 to provide a fluid-tight seal between the tube 50 and the fitting 110 of the coupler. As previously discussed, when the fitting 110 is mounted to the port 80, O-ring 118 provides a fluid tight seal between the fitting 110 and the port 80. Thus, the illustrated configuration provides a fluid-tight seal between the central passage 52 of the tube 50 and the port 80.

As previously noted, quick connect fittings are often subject to impact loads that can damage the fittings. The disclosed configuration provides a more durable connection to reduce damage cause by such impacts. As shown in FIGURE 1, when the tube 50 is coupled to the coupler 100, the first end 54 of the tube 50 extends deep into the fitting 110 as compared with currently known fittings. Specifically, the first end 54 of the tube 50 extends into the third cavity 140 of the fitting 110 so that the end of the tube is at least partially surrounded by the external threads 112 of the fitting. As a result, side loads applied to the tube 50 are be reacted out of the fitting 110 through the threaded portion of the fitting, which is supported by the threaded port 80. Because composite materials are typically stronger in compression than in tension, the resultant compressive forces reacted through the threads are less likely to damage the fitting 110.

Decoupling the tube 50 from the coupler 100 is similar to decoupling known quick connect fittings. A cylindrical tool having an outer diameter roughly the same as the bead is wrapped around the tube 50 and pushed into the coupler 100 until the tool contacts the bead 58. As the tool is inserted, the internal tabs 156 are flexed outwardly. The tool and the tube 50 are then removed together so that the internal tabs 156 stay flexed outwardly until the bead 58 has passed by the internal tabs.

While illustrative embodiments have been illustrated and described, it will be appreciated that various changes can be made therein without departing from the spirit and scope of the invention.

## Claims

1. A coupler for releasably coupling a tube having a circumferential bead to a threaded port, comprising:
(a) a fitting, comprising:
(1) a threaded portion for threadedly engaging the port; and
(2) a central passage extending through the fitting, the central passage comprising a first cavity, a second cavity, and a third cavity positioned in seriatim to receive the tube, the second cavity having a larger diameter than the third cavity, wherein the third cavity is at least partially surrounded by the threaded portion, and the tube extends at least partially into the portion of the third cavity surrounded by the threaded portion when the tube is inserted into the central passage; and
(b) a retainer associated with the fitting, the retainer engaging the bead on the tube to limit movement of the tube relative to the retainer when the tube is inserted into the central passage.

2. The coupler of Claim 1, wherein the retainer is a flexible retainer slidingly coupled to the fitting and at least partially disposed within the first cavity, the retainer engaging an aperture extending through the first cavity to limit motion of the retainer relative to the fitting.

3. The coupler of Claim 1, further comprising:
(a) a collar disposed within the central passage; and
(b) a first O-ring disposed within the second cavity between the shoulder and the collar; the shoulder and the collar limiting movement of the first O-ring, the first O-ring engaging the tube when the tube is inserted into the central passage.

4. The coupler of Claim 3, further comprising:
(a) a second O-ring disposed within the second cavity between the shoulder and the collar, the second O-ring engaging the tube when the tube is inserted into the central passage; and
(b) a spacer positioned between the first O-ring and the second O-ring.

5. The coupler of Claim 1, wherein the fitting is formed from a composite material.

6. The coupler of Claim 5, wherein the composite material is a glass fiber reinforced polyamide 6 having a glass fiber content in the range of 20%-30%.

7. The coupler of Claim 5, wherein the composite material is a glass fiber reinforced polyamide 12 having a glass fiber content in the range of 20%-30%.

8. A quick connector for coupling a hose to a port, comprising:
(a) a tube coupled a first end to the hose, a second end of the tube having a circumferential bead formed thereon; and
(b) a coupler, comprising:
(1) a fitting having a threaded portion for threadedly engaging the port;
(2) a central passage, the central passage extending through the fitting and being at least partially surrounded by the threaded portion, the tube extending at least partially into the portion of the central passage surrounded by the threaded portion when the tube is inserted into the central passage; and
(3) a retainer associated with to the fitting, the retainer engaging the bead on the tube to limit movement of the tube relative to the retainer when the tube is inserted into the central passage.

9. The coupler of Claim 8, wherein the retainer is a flexible retainer slidingly coupled to the fitting and at least partially disposed within the central passage, the retainer engaging an aperture extending radially through the central passage to limit motion of the retainer relative to the fitting.

10. The coupler of Claim 8, further comprising:
(a) a collar disposed within the central passage;
(b) a shoulder formed within the central passage; and
(b) a first O-ring disposed within the central passage between the shoulder and the collar; the shoulder and the collar limiting movement of the first O-ring, the first O-ring engaging the tube when the tube is inserted into the central passage.

11. The coupler of Claim 10, further comprising:
(a) a second O-ring disposed within the central passage between the shoulder and the collar, the second O-ring engaging the tube when the tube is inserted into the central passage; and
(b) a spacer positioned between the first O-ring and the second O-ring.

12. The coupler of Claim 8, wherein the fitting is formed from a composite material.

13. The coupler of Claim 12, wherein the composite material is a glass fiber reinforced polyamide 6 having a glass fiber content in the range of 20%-30%.

14. The coupler of Claim 12, wherein the composite material is a glass fiber reinforced polyamide 12 having a glass fiber content in the range of 20%-30%.

15. The coupler of Claim 12, wherein the tube is formed from one of the group consisting of steel and aluminum.
